# EUROPEAN PATENT APPLICATION

(11) **EP 3 617 492 A1**
(43) Date of publication of application: **04.03.2020**
(21) Application number: 18191891.3
(22) Date of filing: 31.08.2018
(51) Int. Cl.: F02M 55/02, F02M 61/16, F16L 55/033

(54) **A FUEL RAIL FOR A FUEL INJECTION SYSTEM FOR AN INTERNAL COMBUSTION ENGINE AND A METHOD FOR MANUFACTURING A FUEL RAIL**

(71) Applicant: Continental Automotive GmbH, 30165 Hannover (DE)
(72) Inventor: Serra, Giandomenico, 56010 Ghezzano - S.Giuliano Terme (PI) (IT); Di Domizio, Gisella, 56017 San Giuliano Terme (IT); Pasquali, Marco, 56043 Fauglia (Pi) (IT)

(57) **Abstract**

A fuel rail (2) for a fuel injection system for an internal combustion engine is provided. The fuel rail (2) comprises an elongate generally tubular element forming a reservoir for fuel and having a fuel inlet (4) and at least one fuel outlet (6) adapted to be in hydraulic communication with a fuel injector by which fuel is injected into the engine. The interior volume of the tubular element is divided by one or more beams (14) extending generally longitudinally along at least part of the length of the tubular element.

## Description

The present disclosure relates to a fuel rail for a fuel injection system for an internal combustion engine and particularly but not exclusively to a fuel rail for incorporation in a fuel injection system for a multicylinder direct injection internal combustion engine.

A fuel rail typically comprises an elongate reservoir for fuel in which the fuel is supplied to a fuel inlet by a high-pressure fuel pump and the fuel rail has spaced along its length fuel outlets for supplying fuel to a fuel injector for injecting fuel directly into each cylinder of the engine. The volume of fuel in the fuel rail is intended to damp out fluctuations in the pressure of the fuel supplied by the pump so that the pressure at each outlet is equal and substantially constant.

The fuel rail is typically a substantial generally tubular element which has to be strong enough to cope with the stresses of the load applied to the fuel rail by the high pressure of fuel in the reservoir and also to cope with the additional operating stresses caused by the harsh environment in a vehicle caused by vibration of the engine and the high temperatures to which the fuel rail is subjected. As a result, the fuel rail tends to be heavy and costly to construct because of the amount of material used in its construction. These inherent problems are accentuated by the stress concentrations which inevitably arise in the region of the openings in the fuel rail providing the fuel inlet and outlets.

The present disclosure seeks to provide a fuel rail which overcomes or mitigates the disadvantages of the known fuel rails.

According to the present disclosure there is provided a fuel rail for a fuel injection system for an internal combustion engines. The fuel rail comprises an elongate substantially tubular element forming a reservoir for fuel and having a fuel inlet and at least one fuel outlet adapted to be in hydraulic communication with a fuel injector by which fuel is injected into the engine. The interior volume of the tubular element is divided by one or more beams extending generally longitudinally along at least part of the length of the tubular element.

The tubular element may also be called the main gallery of the fuel rail. The internal shape of the tubular element includes one or more structural beams or supporting structures to improve the mechanical resistance of the fuel rail. Additionally, the hydraulic behaviour of the fuel rail can be improved, since the beams can be used to shape the volume and to create obstacles for hydraulic wave propagation in the fuel.

The beam or beams may be used to divide the volume into two or more chambers. The use of the one or more beams can be used to increase the mechanical robustness of the fuel rail without increasing the wall thickness of the tubular element. The thickness of the tubular element, and/or the number, geometry and placement of the beams can be selected depending on the application, the mechanical strength required and any dampening of hydraulic against the propagation of hydraulic waves.

The beam may have the form of a ledge or protrusion which extends from the interior surface of the tubular element into the interior volume. The ledge or protrusion may be considered to divide the interior volume into two chambers which are in fluid communication. In other embodiments, a beam may extend across the entire inner cross-section of the tubular element and divide the interior volume into two chambers. The two chambers may be in fluid communication by positioning one or more holes which extend through the thickness of the beam.

In an embodiment, the beam or beams extend along the full length of the tubular element. A plurality of beams may be provided to divide the tubular element into a plurality of elongate chambers. For example, a plurality of beams may be used to from a cross and divide the interior volume into four chambers.

In some embodiments, the plurality of beams may be non-uniformly disposed about the axis of the tubular element. This enables chambers of different cross-section to be formed within the interior volume.

In some embodiments, the plurality of chambers are interconnected by openings in the beams or by the use of discontinuous beams depending upon the hydraulic characteristics required, particularly at the fuel outlets. The beam or beams may be helical or may extend along the length of the tubular element in a non-axial line. This non-axial line may be irregular so that the cross-sectional area of the chambers varies along the length of the tubular element.

In further embodiments, the beams may be of non-uniform thickness along the length of the beam and/or in the radial cross-section of the beam or beams. For example, one or more of the beams may be thicker in the middle of the length of the tubular element and thinner at the ends of the tubular element, for example adjacent the fuel inlet. One or more of the beams may have a greater thickness in the middle of the radial cross-section and be thinner at the extremities, for example at the junction to the interior surface or another beam. This also enables the hydraulic behaviour, for example the flow rate, to be controlled depending on the position in the interior volume, for example depending on the distance from the inlet and/or from fuel outlet.

The junction or junctions between each beam and the tubular element preferably comprise a radius or radiused filet to reduce stresses at the junction.

The fuel rail is preferably formed of metal such as stainless steel or an alloy, but may also be formed of a plastics material which may be reinforced by glass or carbon fibres.

The disclosure also relates to a method of constructing a fuel rail for a fuel injection system for an internal combustion engine. The method comprises forming one or more beams in an interior surface of an elongate generally tubular element forming a reservoir for fuel such that an interior volume of the tubular element is divided by the one or more beams. The tubular element may have a fuel inlet and at least one fuel outlet adapted to be in hydraulic communication with a fuel injector by which fuel is injected into the engine to form the fuel rail.

Depending on the manufacturing technical, the beam may be formed on the interior surface or be formed integrally with the wall of the tubular element.

The fuel rail may have the form of any of the embodiments described herein. The fuel rail may comprise an elongate generally tubular element forming a reservoir for fuel and having an inlet port and at least one outlet port adapted to be in hydraulic communication with a fuel injector by which fuel is injected into the engine, wherein the interior volume of the tubular element is divided by one or more beams extending generally longitudinally along at least part of the length of the tubular element.

The fuel rail may be formed by an additive manufacturing process. Additive manufacturing techniques may be used to build up the elongate body and the fuel rail layer by layer. For example, the elongate body may be built up layer by layer using 3D (Three-dimensional) printing or Powder Bed Fusion or Directed Energy Deposition. The elongate body may be built up layer by layer by movement of the metal jet print head, laser or electron beam controlled according to a three dimensional model of the elongate body.

In other embodiments, the beam or beams may be formed by other techniques such as brazing, forging and/or extrusion in addition to or in place of additive manufacturing.

A preferred embodiment of the present disclosure will now be described by way of example with reference to the accompanying schematic, perspective part view of a fuel rail.
- Figure 1: illustrates a fuel rail according to an embodiment.
- Figure 2: illustrates different arrangements of interior beams in a fuel rail according to further embodiments.

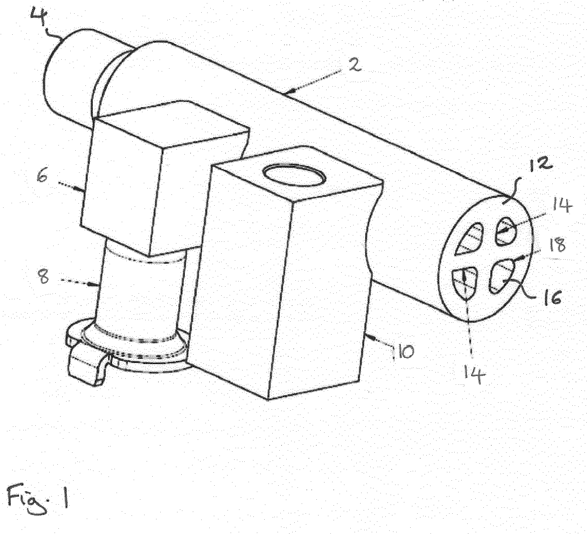

Referring now to figure 1, there is disclosed a fuel rail 2 which comprises a generally tubular element having at one end a fuel inlet 4 which is connected to a high-pressure pump (not shown) supplying fuel to the fuel rail 2. In this schematic view, only one fuel outlet 6 is illustrated which incorporates a fuel injector cup 8 adapted to receive a fuel injector by which fuel can be injected into a cylinder of the internal combustion engine (not shown). In a multicylinder engine, a plurality of fuel outlets 6 will be spaced along the fuel rail, one for each cylinder of the engine. In some designs, a single fuel injector is provided which injects fuel into the engine inlet manifold of a multi cylinder engine.

The schematic view also illustrates a mounting bracket 10 by which the fuel rail 2 is secured to the engine. At its end opposite the fuel inlet 4, a cross-section of the fuel rail is shown which comprises a tubular outer wall 12 supported by four beams 14 arranged in a cross formation and extending along the length of the tubular element to divide the fuel rail into four separate chambers 16. In this way, the beams 14 support the peripheral outer wall 12 of the fuel rail with the result that the thickness of the material can be reduced thereby reducing the weight and size of the fuel rail body.

The fuel rail 2 may be formed by an additive manufacturing technique which greatly facilitates the provision of complex shapes for the beams 14. However, other techniques such a brazing, forging or extrusion may be used depending on the design of the beam or beams 14.

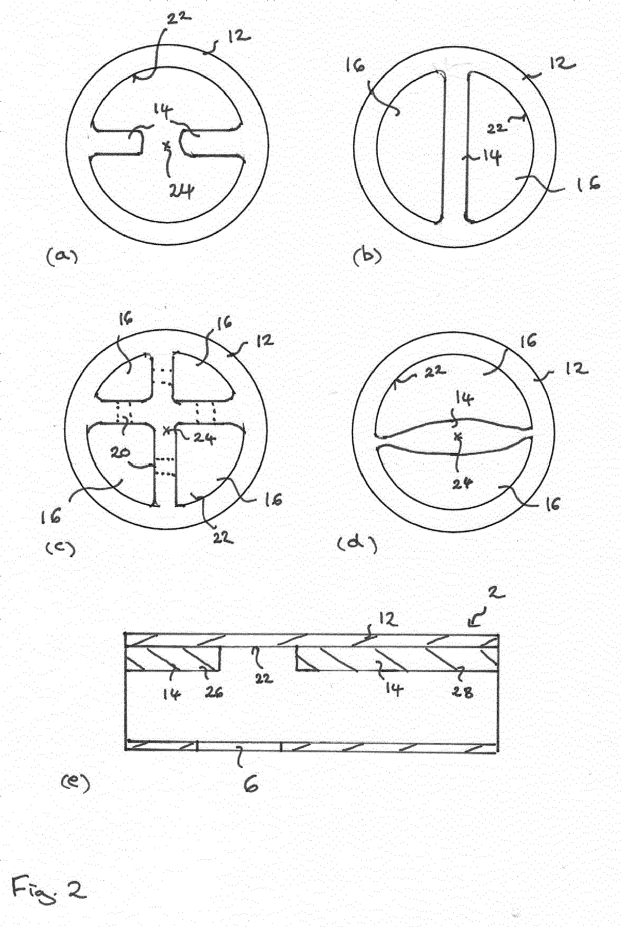

The fuel rail 2 is, however, not limited to having four beams providing a cross formation as illustrated in Figure 1. Figure 2 illustrates five cross-sectional views of the tubular outer wall 12 of the fuel rail 2 with different arrangements of one or more beams 14, which may also be used.

Figure 2a illustrates a fuel rail with two beams 14, each having the form of a ledge that extends from the interior surface 22 of the tubular outer wall 12 towards the longitudinal axis 24 of the fuel rail. Each of the ledges has a free lying distal end that is unconnected with the tubular outer wall 12 or another beam.

Figure 2b illustrates a fuel rail with a single beam 14 that extends across the inner diameter of the tubular outer wall 12 and divides the interior volume into two chambers 16.

Figure 2c illustrates a fuel rail with four beams 14 in a cross formation. The beams 14 are of different length so that the centre of the cross lies radially outside of the longitudinal axis 24 of the fuel rail. The four chambers 16 have differing cross-sections and, therefore differing volumes. The chambers 20 are interconnected by holes 20 which extend through the thickness of the beams 14.

Figure 2d illustrates a fuel rail with a single beam 14 that divides the interior volume into two chambers 16. The beam 14 has a thickness that varies radially. The beam 14 has a greater thickness towards the longitudinal axis 14 and a smaller thickness at the extremities, i.e. at the junctions 18 with the interior surface 22 of the tubular outer wall 12.

Figure 2e illustrates a cross-sectional along the length of a fuel rail 2 and illustrates an embodiment with an interrupted beam 14 that comprises two portions 26, 28 that extend from the interior surface 22 into the interior volume of the tubular element and have a free lying end. The two portions 26, 28 are longitudinally spaced apart from one another by a gap and positioned intermittently along the length of the fuel rail 2. This arrangement forms a fuel rail with a volume that varies along the length of the fuel rail.

In some embodiments, the beams 14 may be non-uniform in their thickness both along the length of the fuel rail 2 and in their radial dimension to the tubular outer wall 12. For example, the beam or beams 14 may be helical along all or part of the fuel rail or may be intermittent or include holes 20 at strategic parts depending upon the hydraulic characteristics required at different points along the fuel rail 2.

### REFERENCES

- 2: Fuel rail
- 4: Fuel inlet
- 6: Fuel outlet
- 8: Fuel injector cup
- 10: Mounting bracket
- 12: Tubular outer wall
- 14: Beams
- 16: Chamber
- 18: Junction
- 20: Opening
- 22: Interior surface
- 24: Longitudinal axis
- 26: Portion of beam
- 28: Portion of beam

## Claims

1. A fuel rail (2) for a fuel injection system for an internal combustion engine, comprising an elongate generally tubular element forming a reservoir for fuel and having a fuel inlet (4) and at least one fuel outlet (6) adapted to be in hydraulic communication with a fuel injector by which fuel is injected into the engine, wherein the interior volume of the tubular element is divided by one or more beams (14) extending generally longitudinally along at least part of the length of the tubular element.

2. A fuel rail according to claim 1, wherein the or each beam (14) extends along the full length of the tubular element.

3. A fuel rail according to claim 1 or claim 2, wherein one beam (14) is provided to divide the interior volume of the tubular element into two chambers (16).

4. A fuel rail according to one of claims 1 to 3, wherein a plurality of beams (14) are provided to divide the interior volume of the tubular element into a plurality of elongate chambers (16).

5. A fuel rail according to claim 4, wherein the plurality of beams (14) are non-uniformly disposed about the axis of the tubular element.

6. A fuel rail according to one of claims 3 to 5, wherein at least two of the chambers (16) are interconnected by one or more openings in the beams.

7. A fuel rail according to one of claims 3 to 5, one or each beam is discontinuous such that at least two of the chambers (16) are interconnected.

8. A fuel rail according to any one of the preceding claims wherein the beam or beams (14) are helical.

9. A fuel rail according to any one of claims 1 to 7, wherein the beam or beams (14) extend along the length of the tubular element in a non-axial line and at least two elongate chambers have a differing cross-sectional area.

10. A fuel rail according to any one of the preceding claims, wherein the beam or beams (14) are of non-uniform thickness along the length of the beam or beams (14) and/or in a radial cross-section of the beam or beams (14).

11. A fuel rail according to any one of the preceding claims wherein a junction or junctions (18) between each beam and the tubular element comprise a radius to reduce stresses at the junction (18).

12. A fuel rail according to any one of claims 1 to 9, wherein the fuel rail is formed of metal such as stainless steel or an alloy, or formed of a plastics material.

13. A method of manufacturing a fuel rail (2) for a fuel injection system for an internal combustion engine, the method comprising:
forming one or more beams (14) in an interior surface of an elongate generally tubular element forming a reservoir for fuel such that an interior volume of the tubular element is divided by the one or more beams (14), the tubular element having an fuel inlet (4) and at least one fuel outlet (6) adapted to be in hydraulic communication with a fuel injector by which fuel is injected into the internal combustion engine.

14. A method of manufacturing the fuel rail according to claim 13, wherein the one or more beams are formed in the interior surface by an additive manufacturing process.

15. A method of manufacturing the fuel rail according to claim 13 or 14, wherein the one or more beams are formed in the interior surface by brazing and/or forging and/or extrusion.
